# EUROPEAN PATENT APPLICATION

(11) **EP 4 714 994 A1**
(43) Date of publication of application: **25.03.2026**
(21) Application number: 24201362.1
(22) Date of filing: 19.09.2024
(51) Int. Cl.: C08G 59/44, C08G 59/54, C08G 59/66, C09D 163/00

(54) **TWO-COMPONENT COMPOSITION PROVIDING FIRE RETARDENCY**

(71) Applicant: Henkel AG & Co. KGaA, 40589 Düsseldorf (DE)
(72) Inventor: Park, Eunkyoung, Seoul (KR); Shin, Shounggi, Seoul (KR); Zhu, Gregory XiaoJie, Shanghai, 201203 (CN)

(57) **Abstract**

A two-component (2K) composition comprising:
a first component comprising:
a) at least one epoxide compound

a second component comprising:
b) i) at least one fatty amide having at least one secondary amide group; and,
b) ii) at least one thiol-terminated branched poly(alkyleneoxide),

wherein at least one of the first and second component further comprises:
c) at least one flame retardant compound;
d) particulate carbon; and,
optionally e) at least one oxide compound selected from the group consisting of titanium dioxide, iron oxide, aluminium oxide, magnesium oxide and silicon dioxide,

further wherein the composition is characterized in that the molar ratio of active hydrogen atoms to epoxide groups is from 0.75:1 to 1:1.

## Description

### FIELD OF THE INVENTION

The present disclosure is directed to a composition which provides fire retardancy. More particularly, the present disclosure is directed to a two-component (2K) composition which comprises a flame retardant compound and which further comprises: a first component comprising epoxide compounds; and, a second curative component comprising at least one amide compound and at least one compound possessing terminal thiol groups. The composition has utility in the coating, adhesion, potting or encapsulation of electronic components - in particular batteries - which are used to power or modulate electric motors.

### BACKGROUND OF THE INVENTION

According to Allied Market Research, the global market for electric motors is projected to reach approximately US$140 Billion by 2025 and to continue thereafter at a compound annual growth rate of 4.5%. The market segments in which the most concentrated growth is projected to occur include industrial machinery, motor vehicles and heating ventilation and air conditioning (HVAC) systems.

As regards electric vehicles, one or more batteries are used as the major power source to the electric motor. Manufacturers are inevitably concerned with the capacity and energy density of the batteries used in electric vehicles. The manufacturers are further concerned with the safety of batteries and, in particular, the capability of a battery to withstand heat and fire. For instance, vehicular collisions can cause electric vehicles to catch fire: providing batteries with heat and fire tolerance can afford passengers time to evacuate an electric vehicle before the battery is compromised.

Intumescent coatings provided on a battery compartment represent one means to enable the battery of the electric vehicle to withstand elevated external heat and fire. Such coatings have found utility for traditional metallic battery casings as well as for glass fiber, polymeric and composite casings. Generally, when an intumescent coating is subjected to heat and / or fire, it significantly expands in thickness: the so-expanded coating layer serves both to insulate the battery compartment from the elevated temperature and fire and to physically stabilize the compartment.

Mica sheeting provided on a battery compartment represents an alternative method of fire protection. The application of such sheet requires a manual and labor-intensive process which is unsuitable for large production volumes for which speed and accuracy are germane.

A still further method of bestowing fire protection to a battery compartment is to apply a flame retardant composition thereto. US2014163167A1 (Lagrange et al.), for example, discloses a flame retardant coating comprising a polyurea elastomer, spray-processable graphite, a graphite stabilizing agent and a flame retardant. The coating of this reference is obtained from a two-part polymerizable system comprising: a first part containing isocyanate; and, a second part containing polyamines, wherein at least one of the first part and the second part contains a flame retardant and the combination of said spray-processable graphite and said graphite stabilizing agent.

WO2016123597A1 (Zepyhros Inc.) describes a two-component adhesive composition which comprises: an epoxy component including a first flame retardant; and, a curing component which includes an adhesion promoter and a second flame retardant.

WO2023/194099A1 (Henkel AG & Co. KGaA) describes a two-part, room temperature curable heat and fire retardant composition comprising: a first part comprising: i) an epoxy resin; and, ii) a flame retardant compound; and, a second part comprising i) a first amine comprising N,N'-bis(3-aminopropyl)ethylenediamine and 3,3'-oxybis(ethylene-oxy) bis(propylamine); ii) a second amine comprising m-phenylenebis(methylamine) and formaldehyde, polymer with 1,3-benzenedimethanamine and phenol; and, iii) a flame retardant compound.

Whilst acknowledging that one-part and two-part fire-retardant compositions may be known in the art and may have utility for different surfaces, it might also be noted that most such compositions either do not provide sufficient heat- and fire-retardancy properties for battery box coating applications or are unsuitable for systematized application in high-throughput processes. There is considered to remain a need to provide for coating compositions which provide efficacious heat- and fire-retardancy, which have rheological properties which enable their application by high volume techniques and which can also demonstrate sufficiently fast curing speeds so to enable automated and high-speed processing of the substrates to be coated, potted or encapsulated.

### STATEMENT OF THE INVENTION

In accordance with a first aspect of the invention there is provided a two-component (2K) composition comprising:
a first component comprising:
   a) at least one epoxide compound
a second component comprising:
   b) i) at least one fatty amide having at least one secondary amide group; and,
   b) ii) at least one thiol-terminated branched poly(alkyleneoxide),

wherein at least one of the first and second component of the composition further comprises:
   c) at least one flame retardant compound;
   d) particulate carbon; and,
   optionally e) at least one oxide compound selected from the group consisting of: titanium dioxide; iron oxide; aluminium oxide; magnesium oxide; and, silicon dioxide,
wherein the composition is characterized in that the molar ratio of active hydrogen atoms provided by said second component to the total of epoxide groups provided by said first component is from 0.75: 1 to 1:1. The two-component composition as defined may be cured at room temperature. Moreover, the composition, when cured, demonstrates flame retardancy.

In exemplary embodiments, the two-component (2K) composition may be further defined in that: constituent a) constitutes from 5 to 30 wt.% of the composition; constituent b) i) constitutes from 1 to 20 wt.% of the composition; constituent b) ii) constitutes from 0.5 to 10 wt.% of the composition; constituent c) constitutes from 20 to 65 wt.% of composition; constituent d) constitutes from 1 to 30 wt.% of the composition; constituent e) constitutes from 0 to 30 wt.% of the composition; and, the molar ratio of active hydrogen atoms to epoxide groups is from 0.75:1 to 1:1.

In other embodiments, the two-component (2K) composition may be further defined in that: constituent a) constitutes from 5 to 25 wt.%, preferably from 5 to 20 wt.% of the composition; constituent b) i) constitutes from 1 to 15 wt.%, preferably from 1 to 10 wt.% of the composition; constituent b) ii) constitutes from 0.5 to 5 wt.%, preferably from 0.5 to 2 wt.% of the composition; constituent c) constitutes from 40 to 65 wt.%, preferably from 45 to 60 wt.% of the composition; constituent d) constitutes from 1 to 25 wt.%, preferably from 5 to 25 wt.% of the composition; constituent e) constitutes from 1 to 30 wt.%, preferably from 5 to 30 wt.% of the composition; and, the molar ratio of active hydrogen atoms to epoxide groups is from 0.75: 1 to 1:1, preferably from 0.8:1 to 1:1.

It is preferred that constituent a) comprises at least one epoxide compound chosen from: polyglycidyl ethers of polyhydric alcohols; polyglycidyl ethers of polyhydric phenols; polyglycidyl esters of polycarboxylic acids; epoxidized polyethylenically unsaturated hydrocarbons; and, mixtures thereof. In an important embodiment, constituent a) comprises the reaction product of epichlorohydrin and 4,4'-(propane-2,2-diyl)diphenol.

It is preferred that constituent b) i) of the composition comprises at least one fatty amide having at least one secondary amide group and which is obtainable by the reaction of:
a monocarboxylic acid of the general formula R^{a}C(O)OH; and,
an alkyleneamine having the general formula H₂N(C_{b}H_{2b}NH)_{c}H
wherein:
R^{a} is C₄-C₂₄ alkyl or C₄-C₂₄ alkenyl;
b is 2 or 3; and,
c is from 2 to 8.

In an important embodiment, constituent b) i) is obtainable by the reaction of: tall oil fatty acid; and, at least one alkyleneamine having said general formula H₂N(C_{b}H_{2b}NH)_{c}H.

It is preferred that constituent b) ii) of the composition comprises a thiol-terminated branched poly(alkylene oxide) having the general formula (PT):

[HO-(-R^{T}-O-)_{α}-CH₂-]_{β}-X-1-CH₂-(-O-R^{T}-)_{α}-A-SH]_{γ} (PT)

wherein:
X is the residue of an aliphatic polyol, said residue having a valency of (β+γ);
R^{T} is C₂-C₄ alkylene;
A is a covalent bond or a divalent linking group;
each α is independently an integer of from 5 to 1000; and,
β is an integer of from 0 to 4; and,
γ is an integer of from 2 to 6;
subject to the proviso that the sum (β+γ) is from 3 to 6.

In an important embodiment of general formula (PT): X is the residue of an aliphatic polyol, said residue having a valency of (β+γ); R^{T} is C₃ alkylene; A is -C(O)O-CH(OH)-CH₂-; each α is an integer of from 10 to 1000; β is an integer of from 0 to 4; and, γ is an integer of from 2 to 6, subject to the proviso that the sum (β+γ) is from 3 to 6.

Constituents c) and d) of the composition and, when present, constituent e) of the composition may each independently of one another be provided in the first component, the second component or both of the first and second components thereof. It is preferred that a fraction of the total amount of constituents c) and d) and, when present, constituent e) is provided in each of the first and second components.

It is preferred that constituent d) of the composition comprises expanded graphite having a mean volume particle size (D_{V}50) of from 0.5 to 100 µm, as measured by laser diffraction.

In accordance with a second aspect of the disclosure, there is provided the use of the two-component (2K) composition as defined hereinabove and in the appended claims as: a heat and fire retardant coating composition; a structural adhesive; or, a potting compound.

Where the aspects of the disclosure are described above as having certain embodiments, any one or more of those embodiments can be implemented in or combined with any one of the further embodiments, even if that combination is not explicitly described. Expressed differently, the described embodiments are not mutually exclusive unless stated to be so, and permutations thereof remain within the scope of this disclosure.

### DEFINITIONS

As used herein, the singular forms "*a*", "*an*" and *"the"* include plural referents unless the context clearly dictates otherwise.

The terms *"comprising", "comprises"* and *"comprised of*" as used herein are synonymous with *"including", "includes", "containing"* or *"contains",* and are inclusive or open-ended and do not necessarily exclude additional, non-recited members, elements or method steps.

As used herein, the term *"consisting of*" excludes any element, ingredient, member or method step not specified. For completeness, the term *"comprising"* encompasses *"consisting of".*

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being "*from 0 to x*" specifically includes 0 wt.%: the ingredient defined by said range may be absent from the composition or may be present in the composition in an amount up to x wt.%.

The words *"preferred".* "*preferably*", *"desirably"* and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word "*exemplary*" is used herein to mean serving as an example, instance, or illustration. Any aspect or design described herein as "*exemplary*" is not necessarily to be construed as preferred or advantageous over other aspects or designs. Rather, use of the word exemplary is intended to present concepts in a concrete fashion.

As used throughout this application, the word *"may"* is used in a permissive sense - that is meaning to have the potential to - rather than in the mandatory sense.

Spatially relative terms, such as *"upper", "lower", "top", "back",* "*above*", *"below",* "*left*", *"right"* and the like are used herein to describe an element's relationship to another element(s) as illustrated in the figures. Obviously all such spatially relative terms refer to the orientation shown in the figures only for ease of description and are not necessarily limiting given that an apparatus can assume orientations different from those illustrated in the figures when in use.

As used herein, room temperature is 23°C plus or minus 2°C. As used herein, *"ambient conditions"* means the temperature and pressure of the surroundings in which either the composition or a cured product obtained therefrom is located.

The molecular weights referred to in this specification can be measured with gel permeation chromatography (GPC) using polystyrene calibration standards, such as is done according to ASTM 3536.

Viscosities of the compositions described herein are, unless otherwise stipulated, measured using the Anton Paar Rheometer, Model MCR 301 at standard conditions of 25°C and 50% Relative Humidity (RH). The rheometer is calibrated one time a year and checked by services. The calibration is done using standard program for motor and measuring system inertia liquids of known viscosity from 1 to 50,000 cps (Parallel Plate PP25). Measurements of the compositions according to the present disclosure are done using the parallel plate PP25 at different shear rates from 0.1 to 100 s⁻¹.

Unless otherwise stated, the term "*particle size"* refers to the largest axis of the particle. In the case of a generally spherical particle, the largest axis is the diameter.

The term *"mean volume particle size" (Dv50),* as used herein, refers to a particle size corresponding to 50% of the volume of the sampled particles being greater than and 50% of the volume of the sampled particles being smaller than the recited Dv50 value. Particle size is determined herein by laser diffraction using Anton Paar Particle Size Analyzer (PSA) 1190.

As used herein, *"aspect ratio"* is defined as the ratio of the particle diameter located perpendicular to the maximum diameter (i.e., the Aspect Diameter) to the maximum diameter. The aspect ratio can be evaluated by image analyses of oriented particles. If the aspect ratio is being determined on a collection of particles, the aspect ratio may be measured on a few representative particles and the results averaged: representative particles should be sampled by ASTM D5680-95a (Reapproved 2001).

The term "*flame retardant compound"* as used herein refers to a compound which, when present in the cured composition of the present disclosure, results in that composition showing greater burn resistance than an otherwise identical composition from which that compound is absent. A number of tests are known for determining the flame retardancy of materials like the open flame test as described in the examples.

As used herein, the term *"thermally conductive"* refers to a material having a thermal conductivity of at least 10 W/m K as determined according to ASTM E1530 at 23°C and at a relative humidity of 50%. Materials which are thermally conductive are not precluded from being electrically conductive. Thus thermally conductive filler mentioned herein may be both thermally conductive and electrically conductive or, alternatively, may be thermally conductive and electrically insulating.

As used herein, the term *"metallic"* may be used to denote pure metal, metal alloys or metal composites. As used herein, the term *"alloy"* refers to a substance composed of two or more metals or of a metal and a non-metal which have been intimately united, usually by being fused together and dissolved in each other when molten.

The term *"electronic component"* denotes any component, member or apparatus which fulfils any electric, magnetic and/or electronic functionality. This means that electric, magnetic and/or electromagnetic signals may be applied to and/or generated by the electronic component during regular use.

"*Two-component (2K) compositions"* in the context of the present disclosure are understood to be compositions in which a first component and a second component are stored in separate vessels because of their (high) reactivity. The two components are mixed only before or during application and then react, typically without additional activation, with bond formation and thereby formation of a polymeric network. Herein higher temperatures may be applied in order to accelerate the cross-linking reaction.

As used herein, the term *"monomer"* refers to a substance that can undergo a polymerization reaction to contribute constitutional units to the chemical structure of a polymer. The term "*monofunctional*", as used herein, refers to the possession of one polymerizable moiety. The term "*polyfunctional*", as used herein, refers to the possession of more than one polymerizable moiety.

The term *"polythiol"* as used herein refers to simple or complex organic compounds having at least two pendant or terminal thiol groups (-SH) per molecule. Such polythiols can generally be represented by the formula R^{t} - (SH)_{c} wherein c is an integer having a value of at least 2 and R^{t} is a polyvalent organic moiety of valence c.

As used herein the term *"active hydrogen atom"* means a hydrogen atom capable of reacting according to the Zerewitinoff reaction.

As used herein, the term *"equivalent (eq.)"* relates, as is usual in chemical notation, to the relative number of reactive groups present in a reaction. The term *"equivalent weight"* as used herein refers to the molecular weight divided by the number of a function concerned. As such, "*epoxy equivalent weight"* (EEW) means the weight of resin, in grams, that contains one equivalent of epoxy.

As used herein, the term "*epoxide compound*" denotes a compound characterized by the presence of at least one cyclic ether group, namely one wherein an ether oxygen atom is attached to two adjacent carbon atoms thereby forming a cyclic structure. The term is intended to encompass monoepoxide compounds, diepoxide compounds, higher polyepoxide compounds having more than two epoxide groups and epoxide terminated prepolymers. The term *"monoepoxide compound*" is meant to denote epoxide compounds having one epoxide group. The term "*polyepoxide compound"* is meant to denote epoxide compounds having at least two epoxide groups. The term *"diepoxide compound"* is meant to denote epoxide compounds having two epoxide groups.

By the term "*polyglycidyl polyether of a polyhydric phenol*" is meant a polyepoxide compound having: terminal epoxide groups; at least one aromatic nucleus, which nucleus may be a fused aromatic nucleus; and, at least two aliphatic groups including terminal epoxy containing aliphatic groups, the aliphatic groups being united to said aromatic nucleus or nuclei through carbon to oxygen to carbon linkages. Such compounds may be produced by the reaction of epichlorohydrin with a polyhydric phenol.

As used herein, "*C₁*-*Cₙ alkyl"* refers to a monovalent group that contains from 1 to *n* carbons atoms, that is a radical of an alkane and includes straight-chain and branched organic groups. As such, a "*C₁-C₄ alkyl"* refers to a monovalent group that contains from 1 to 4 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; and, tert-butyl. In the present invention, such alkyl groups may be unsubstituted or may be substituted with one or more halogen. Where applicable for a given moiety (R), a tolerance for one or more non-halogen substituents within an alkyl group will be noted in the specification.

The terms *"alkylene group"* refers to a divalent radical derived from an alkyl group, as defined above.

The term "*C₁-Cₙ hydroxyalkyl*" as used herein refers to an HO-(alkyl) group having from 1 to n carbon atoms, where the point of attachment of the substituent is through the oxygen-atom and the alkyl group is as defined above.

The term *"C₃-C₁₈ cycloalkyl"* as used herein means a saturated cyclic hydrocarbon having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Exemplary cycloalkyl groups include cyclopropyl, cyclobutyl, cyclopentyl or cyclohexyl groups.

As used herein, *"C₂-C₂₀ alkenyl"* group refers to a monovalent aliphatic carbon group that contains 2 to 20 carbon atoms and at least one double bond disposed in any position. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, *"E"* and *"Z"* configurations, as appreciated by those of ordinary skill in the art. Examples of said C₂-C₂₀ alkenyl groups include, but are not limited to: -CH=CH₂; -CH=CHCH₃; -CH₂CH=CH₂; -C(=CH₂)(CH₃); - CH=CHCH₂CH₃; -CH₂CH=CHCH₃; -CH₂CH₂CH=CH₂; -CH=C(CH₃)₂; -CH₂C(=CH₂)(CH₃); - C(=CH₂)CH₂CH₃; -C(CH₃)=CHCH₃; -C(CH₃)CH=CH₂; -CH=CHCH₂CH₂CH₃; -CH₂CH=CHCH₂CH₃, -CH₂CH₂CH=CHCH₃; -CH₂CH₂CH₂CH=CH₂; -C(=CH₂)CH₂CH₂CH₃; -C(CH₃)=CHCH₂CH₃; - CH(CH₃)CH=CHCH, -CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, *"C₆-C₁₈ aryl"* group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present disclosure, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl.

The term *"arylene"* as used herein refers to a divalent radical counterpart of an aryl group. Further, as used herein, *"alkylaryl"* refers to alkyl-substituted aryl groups as set forth above. Moreover, as used herein *"aralkyl"* means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. *"Heteroalkyl", "heterocycloalkyl"* and "*heteroaryl*" moieties are alkyl, cycloalkyl and aryl groups as defined hereinabove, respectively, containing N, O, Si or S as part of their structure.

The term *"substituted'* refers to substitution with at least one suitable substituent. For completeness: the substituents may connect to the specified group or moiety at one or more positions; and, multiple degrees of substitution are allowed unless otherwise stated. Further, the terms *"substitution"* or *"substituted with"* include the implicit proviso that such substitution is in accordance with permitted valence of the substituted atom and the substituent, and that the substitution results in a stable compound that does not spontaneously undergo transformation by, for instance, rearrangement, cyclization or elimination.

### BRIEF DESCRIPTION OF THE DRAWINGS

Various other objects, advantages, and features of the disclosure will become apparent to those skill in the art from the following discussion taken in conjunction with the appended drawings wherein:
Figure 1 depicts the experimental set-up for the performance of a thermal propagation test applicable to cured coatings obtained from the two-component (2K) composition of the present disclosure and to comparative coatings.
Figure 2 graphically illustrates the results of said thermal propagation test for a two-component (2K) composition in accordance with an embodiment of the present disclosure.

### DETAILED DESCRIPTION OF THE INVENTION

As described above, the present disclosure provides a two-component (2K) composition comprising: a first component comprising a) at least one epoxide compound; and, a second component comprising: b) i) at least one fatty amide having at least one secondary amide group; and, b) ii) at least one thiol-terminated branched poly(alkyleneoxide). The compounds of the second component have active hydrogen atoms which are reactive towards the epoxide groups of the first component. The composition *in toto* is characterized in that the molar ratio of active hydrogen atoms to epoxide groups is from 0.75:1 to 1:1.

The composition further comprises: c) at least one flame retardant compound; d) particulate carbon; and, optionally e) at least one oxide compound selected from the group consisting of titanium dioxide, iron oxide, aluminium oxide, magnesium oxide and silicon dioxide. These constituents c), d) and e) may, independently of one another, be included wholly in the first component, wholly in the second component or partially in both of the first and second components.

### a) Epoxide Compounds

The first component of the two-component (2K) composition at least one epoxide compound. Typically the composition comprises from 5 to 30 wt.% a) said at least one epoxide compound, based on the total weight of the composition. For example, the composition may contain from 5 to 25 wt.% or from 5 to 20 wt.% of a) said at least one epoxide compound, based on the total weight of said composition.

The epoxide compounds of constituent a) may include monoepoxide compounds, polyepoxide compounds and combinations thereof. Thus the epoxide compounds may be pure compounds but equally may be mixtures of epoxide functional compounds, including mixtures of compounds having different numbers of epoxide groups per molecule. An epoxide compound may be saturated or unsaturated, aliphatic, cycloaliphatic, aromatic or heterocyclic and may be substituted. Further, the epoxide compound may also be monomeric or polymeric.

Without intention to limit the present disclosure, illustrative monoepoxide compounds include: alkylene oxides; epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and α-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; monoepoxy-substituted alkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

The following glycidyl ethers might be mentioned as exemplary monoepoxide compounds for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an embodiment, the monoepoxide compound conforms to Formula (AI) herein below: 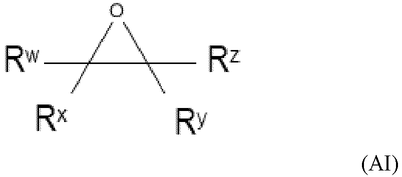 wherein: R^{w}, R^{x}, R^{y} and R^{z} may be the same or different and are independently selected from hydrogen, a halogen atom, a Ci-Cs alkyl group, a C₃ to C₁₀ cycloalkyl group, a C₂-C₁₂ alkenyl group, a C₆-C₁₈ aryl group or a C₇-C₁₈ aralkyl group, with the proviso that at least one of R^{y} and R^{z} is not hydrogen.

It is preferred that R^{w}, R^{x} and R^{y} are hydrogen and R^{z} is either a phenyl group or a C₁-C₈ alkyl group and, more preferably, a C₁-C₄ alkyl group.

Having regard to this embodiment, exemplary monoepoxides include: ethylene oxide; 1,2-propylene oxide (*propylene oxide*); 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

Again, without intention to limit the present two-component (2K) compositions, suitable polyepoxide compounds may be liquid, solid or in solution in solvent. It is preferred that the or each polyepoxide compound included in constituent a) has an epoxide equivalent weight of from 100 to 700 g/eq, for example from 120 to 320 g/eq. Typically diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be included in the curable composition, mention may be made of: polyglycidyl ethers of polyhydric alcohols; polyglycidyl ethers of polyhydric phenols; polyglycidyl esters of polycarboxylic acids; and, epoxidized polyethylenically unsaturated hydrocarbons. Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of C₂-C₃₀ aliphatic diols, such as 1,2-ethanediol, 1,4-butanediol, 1,6-hexanediol, 1,8-octanediol and 1,12-dodecanediol; diglycidyl ethers of C₅-C₃₀ cycloaliphatic diols, such as cyclopentane diol and cyclohexane diol; diglycidyl ethers of C₆-C₃₀ dihydric phenolic compounds, such as pyrocatechol, resorcinol, hydroquinone, 4,4'-(propane-2,2-diyl)diphenol (*Bisphenol-A*), 4,4'-dihydroxydiphenyl methane (*Bisphenol-F*), 4,4'-dihydroxy-3,3'-dimethyldiphenyl methane, 4,4'-dihydroxydiphenyl methyl methane, 4,4'-dihydroxydiphenyl cyclohexane, 4,4'-dihydroxy-3,3'-dimethyldiphenyl propane and 4,4'-dihydroxydiphenyl sulfone (*Bisphenol-S*); polyalkyleneglycol based diglycidyl ethers, in particular polypropyleneglycol diglycidyl ethers; and, polycarbonatediol based glycidyl ethers.

In an exemplary embodiment, constituent a) comprises the reaction product of epichlorohydrin and 4,4'-(propane-2,2-diyl)diphenol (*Bisphenol-A*).

Further illustrative polyepoxide compounds which may be used in or as constituent a) include but are not limited to: glycerol polyglycidyl ether; trimethylolpropane polyglycidyl ether; pentaerythritol polyglycidyl ether; diglycerol polyglycidyl ether; polyglycerol polyglycidyl ether; sorbitol polyglycidyl ether; triglycidyl ether of 4,4',4"-trihydroxyphenyl methane; triglycidyl ether of tris(4-hydroxyphyenyl)methane; polyglycidyl ethers of methylenebis(naphthalene)-diol, -triol, or -tetrol; 2,7,2',7'-tetraglycidyloxynaphthalene methane; and 1,1,2,2-tetrakis(4-glycidyloxyphenyl)ethane.

Glycidyl esters of polycarboxylic acids having utility in the present curable compositions may be derived from polycarboxylic acids which contain at least two carboxylic acid groups and no other groups reactive with epoxide groups. The polycarboxylic acids can be aliphatic, cycloaliphatic, aromatic and heterocyclic. The preferred polycarboxylic acids are those which contain not more than 18 carbon atoms per carboxylic acid group of which suitable examples include but are not limited to: oxalic acid; sebacic acid; adipic acid; succinic acid; pimelic acid; suberic acid; glutaric acid; dimer and trimer acids of unsaturated fatty acids, such as dimer and trimer acids of linseed fatty acids; phthalic acid; isophthalic acid; terephthalic acid; trimellitic acid; trimesic acid; phenylene-diacetic acid; chlorendic acid; hexahydrophthalic acid, in particular hexahydroorthophthalic acid (1,2-cyclohexanedicarboxylic acid); diphenic acid; naphthalic acid; polyacid terminated esters of di-basic acids and aliphatic polyols; polymers and co-polymers of (meth)acrylic acid; and, crotonic acid.

Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

And examples of highly preferred polyepoxide compounds include: bisphenol-A epoxy resins, such as DER^{™} 331, DER^{™} 332, DER^{™} 383, JER^{™} 828 and Epotec YD 128; bisphenol-F epoxy resins, such as DER^{™} 354; bisphenol-A/F epoxy resin blends, such as DER^{™} 353; aliphatic glycidyl ethers, such as DER^{™} 736; polypropylene glycol diglycidyl ethers, such as DER^{™} 732; solid bisphenol-A epoxy resins, such as DER^{™} 661 and DER^{™} 664 UE; solutions of bisphenol-A solid epoxy resins, such as DER^{™} 671-X75; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; sorbitol glycidyl ether, such as ERISYS^{™} GE-60; and, bis(2,3-epoxypropyl)cyclohexane-1,2-dicarboxylate, available as Lapox Arch-11.

The above aside, the composition can in certain embodiments comprise epoxide-functional alkoxy silanes having the formula (ES):

E-(CH₂)ₙ-Si(R^{s})ₘ(OR^{t})₃₋ₘ (ES)

wherein:
E is 2,3-epoxypropoxy, epoxycyclohexyl or epoxycyclopentyl;
n is from 1-10;
m is 0, 1 or 2;
each R^{s} is independently C₁-C₃ alkyl; and,
each R^{t} is independently C₁-C₃ alkyl.

In preferred embodiments: E is 2,3-epoxypropoxy; n is from 1 to 8; m is 0 or 1; R^{s}, when present, is methyl or ethyl; and, each R^{t} is independently methyl or ethyl.

Exemplary silanes, which may be used alone or in combination, include but are not limited to: 2-(3,4-epoxycyclohexyl)ethyltrimethoxysilane; 3-glycidoxypropyl methyldimethoxysilane; γ-glycidoxy propyl trimethoxy silane; γ-glycidoxy ethyl trimethoxy silane; γ-glycidoxymethyl trimethoxy silane; γ-glycidoxy methyl triethoxy silane; 3-glycidoxypropyl methyldiethoxysilane; γ-glycidoxy ethyl triethoxy silane; γ-glycidoxy propyl triethoxy silane; and, 8-glycidooxyoctyl trimethoxysilane. The use of γ-glycidoxy propyl trimethoxy silane may be mentioned in particular.

When present, the epoxide functional alkoxysilanes should constitute less than 60 wt.%, preferably less than 55 wt.% or less than 50 wt.%, based on the total weight of the epoxide compounds in the composition.

The present disclosure does not preclude the first component of the curable compositions from further comprising one or more cyclic monomers selected from the group consisting of: oxetanes; cyclic carbonates; cyclic anhydrides; and, lactones. However, such cyclic co-monomers should constitute less than 10 wt.%, preferably less than 8 wt.% or less than 5 wt.%, based on the total weight of the epoxide functional compounds in the first component.

### b) Compounds of the Second Component

The second component of the composition - providing effectively the curative or hardener for the epoxide compound(s) of the first component - necessarily comprises: b) i) at least one fatty amide having at least one secondary amide group; and, b) ii) at least one thiol-terminated branched poly(alkyleneoxide).

The quantities of each of constituent b) i) and b) ii) in the composition is selected such that the molar ratio of active hydrogen atoms to the total of epoxide groups is in the composition from 0.75:1 to 1:1, for example from 0.8:1 to 1:1. The molar ratio terms above are intended to ensure that as limited an amount as possible of unreacted thiol- and amide-functional compounds are present in the cured product of the two component (2K) composition: such un-reacted compounds can be deleterious to the performance of that product. Desirably, the cured product should be essentially free of thiol- and amide-functional compounds.

Subject to meeting the aforementioned molar ratio term, it is preferred that: constituent b) i) constitutes from 1 to 20 wt.%, for example from 1 to 15 or from 1 to 10 wt.% of the composition; and / or, constituent b) ii) constitutes from 0.5 to 10 wt.%, for example from 0.5 to 5 wt.% or from 0.5 to 2 wt.% of the composition.

In important embodiments, which are not mutually exclusive of the compositional ranges given above, it is preferred that the constituent b) i), by weight, is provided in excess of the constituent b) ii). For example, the ratio by weight of constituent b) i) to constituent b ii) in the composition may be from 55:45 to 99:1, preferably from 60:40 to 95:1 or from 70:30 to 90:10. Given that the proportion of constituent b) ii) said polythiol is a determinant of the reaction rate, including said constituent as the minority curative prevents the curing reaction from proceeding too fast.

### b) i) Amide Curative

The second component of the composition comprises at least one fatty amide having at least one secondary amide group. The term *"fatty acid amide"* is intended to mean an amide obtained either from a fatty acid or from an acid halide or anhydride derivative of a fatty acid. The term fatty acid is used in accordance with its standard meaning as set out by IUPAC (*https:*//*doi.org*/*10.1351*/*goldbook.F02330*).

In important embodiments, constituent b) i) comprises at least one fatty amide having at least one secondary amide group and which is obtainable by the reaction of:
a monocarboxylic acid of the general formula R^{a}C(O)OH; and,
an alkyleneamine having the general formula H₂N(C_{b}H_{2b}NH)_{c}H
wherein:
R^{a} is C₄-C₂₄ alkyl or C₄-C₂₄ alkenyl;
b is 2 or 3; and,
c is from 2 to 8.

As regards said monocarboxylic acid, R^{a} is preferably C₆-C₂₂ alkyl or C₆-C₂₂ alkenyl, wherein said alkenyl group has from 1 to 3 carbon to carbon double bonds. More preferably R^{a} is C₁₀-C₂₀ alkyl or C₁₀-C₂₀ alkenyl, wherein said alkenyl group has from 1 to 3 carbon to carbon double bonds. In certain preferred embodiments R^{a} is C₁₄-C₂₀ alkyl or C₁₄-C₂₀ alkenyl, wherein said alkenyl group has from 1 to 3 carbon to carbon double bonds.

Exemplary reactant monocarboxylic acids include but are not limited to: decanoic acid; decenoic acid; dodecanoic acid; dodecenoic acid; tridecanoic acid; tridecenoic acid; tetradecanoic acid; tetradecenoic acid; hexadecanoic acid *(palmitic acid*); hexadecenoic acid ((9Z)-hexadec-9-enoic acid, *palmitoleic acid*); octadecanoic acid (*stearic acid*); octadecenoic acids, including (9Z)-octadec-9-enoic acid (*oleic acid*) and (E)-octadec-9-enoic acid (*elaidic acid*); octadecadienoic acid, including (9Z,12Z)-octadeca-9,12-dienoic acid (*linoleic acid*) and (9E,12E)-octadeca-9,12-dienoic acid (*linoelaidic acid*); octadecatrienoic acid, such as (9Z,12Z,15Z)-octadeca-9,12,15-trienoic acid (*α-linolenic acid*) and (6Z,9Z,12Z)-octadeca-6,9,12-trienoic acid (*γ-linolenic acid*); icosanoic acid (*arachidic acid*); eicosanoic acids, in particular 9-eicosanoic acid, 11-eicosanoic acid and 13-eicosanoic acid; and, docosanoic acid (*behenic acid*).

Exemplary reactant alkyleneamines include: diethylenetriamine; triethylenetetramine; tetraethylenepentamine; pentaethylenehexamine; hexaethyleneheptamine; dipropylenetriamine; tripropylenetetramine; tetrapropylenepentamine; and, pentapropylenehexamine. The use of tetraethylenepentamine as a reactant may be mentioned in particular.

It is envisaged that constituent b) i) may be obtainable by the reaction of: at least two monocarboxylic acids having the general formula R^{a}C(O)OH as defined above; and, at least one alkyleneamine having the general formula H₂N(C_{b}H_{2b}NH)_{c}H. An exemplary reactant mixture comprises 2 or more monocarboxylic acids having the general formula R^{a}C(O)OH wherein R^{a} is C₁₄-C₂₀ alkyl or C₁₄-C₂₀ alkenyl, said alkenyl group having from 1 to 3 carbon to carbon double bonds.

Where the reactant is a mixture of monocarboxylic acids, this permits the use of acid mixtures which are obtained by hydrolysis of natural fats and oils, of which coconut oil, corn oil, cottonseed oil, tallow and soybean oil may be mentioned as examples. A particularly useful fatty acid mixture is tall oil fatty acid obtained from tall oil.

Tall oil is a mixture of rosin acids and fatty acids obtained upon acidulation of the black liquor soap produced in the sulfate (Kraft) process for the manufacture of paper. Crude tall oil is commonly distilled to provide various fractions in which the ratio of fatty acids to rosin acids varies from 1:99 to 99:1. In the context of this description, the term *"tall oil fatty acid*" (CAS: 61790-12-3) is intended to include tall oil compositions having a fatty acid content of at least 50 wt.%, the balance being mainly rosin acids in admixture with minor amounts of unsaponifiable materials. The fatty acids in tall oil fatty acid consist predominantly of: hexadecanoic acid (*palmitic acid*); octadecanoic acid (*stearic acid*); (9Z)-octadec-9-enoic acid (*oleic acid*) (9Z,12Z)-octadeca-9,12-dienoic acid (*linoleic acid*); (9Z)-hexadec-9-enoic acid (*palmitoleic acid*); icosanoic acid (*arachidic acid*); and, docosanoic acid (*behenic acid*).

In a preferred embodiment, constituent b) i) is obtainable by the reaction of: tall oil fatty acid; and, at least one alkyleneamine having the general formula H₂N(C_{b}H_{2b}NH)_{c}H as defined above. In particular, constituent b) i) is obtainable by the reaction of: tall oil fatty acid; and, at least one alkyleneamine chosen from diethylenetriamine, triethylenetetramine, tetraethylenepentamine, pentaethylenehexamine, hexaethyleneheptamine and mixtures thereof. The use of tetraethylenepentamine as either one or the reactant alkyleneamine may again be mentioned in particular.

The aforementioned acylation reactions between the monocarboxylic acid(s) - or the halide or anhydride derivatives thereof - and alkyleneamine(s) may typically be conducted at a temperature of from 80 to 200°C in the absence of solvent. The progress of the reaction, in particular, the stoichiometry of conversion of the primary amine groups, may be monitored by measurement of the condensation water. That aside, the skilled artisan should conduct the acylation reactions under conditions which minimize the formation cyclic co-products, specifically imidazoline derivatives where a ethylene-polyamine is reacted and tetrahydropyrimidine derivatives where a propylene-polyamine is reacted.

For completeness, an exemplary commercial product having utility as constituent b) i) is G-A0432 available from Kukdo.

### b) ii) Thiol-terminated Branched Poly(alkylene oxide) Curative

The second component of the composition comprises b) ii) at least one branched poly(alkylene oxide) having at least two terminal thiol groups. The polymers of this constituent may be exemplified by having: from 2 to 6, such as from 2 to 4 terminal thiol groups; and, a weight average molecular weight of from 1000 to 100000 daltons, such as from 1000 to 5000 daltons. The polymers of this constituent may be obtained by the thiolation of hydroxyl functional branched poly(alkylene oxide).

In an embodiment, constituent b) ii) comprises a thiol-terminated branched poly(alkylene oxide) having the general formula (PT):

[HO-(-R^{T}-O-)_{α}-CH₂-]_{β}-X-[-CH₂-(-O-R^{T}-)_{α}-A-SH]_{γ} (PT)

wherein:
X is the residue of an aliphatic polyol, said residue having a valency of (β+γ);
R^{T} is C₂-C₄ alkylene;
A is a covalent bond or a divalent linking group;
each α is independently an integer of from 5 to 1000; and,
β is an integer of from 0 to 4; and,
γ is an integer of from 2 to 6;
subject to the proviso that the sum (β+γ) is from 3 to 6.

In embodiments of the polymer of Formula (PT): X is the residue of an aliphatic polyol, said residue having a valency of (β+γ); R^{T} is C₂-C₃ alkylene; A is a covalent bond, -C(O)O-CH₂-, -C(O)O-CH₂-CH₂- or C(O)O-CH(OH)-CH₂-; each α is an integer of from 10 to 1000; β is an integer of from 0 to 4; and, γ is an integer of from 2 to 6; subject to the proviso that the sum (β+γ) is from 3 to 6.

In other embodiments of the polymer of Formula (PT): X is the residue of an aliphatic polyol, said residue having a valency of (β+γ); R^{T} is C₃ alkylene; A is C(O)O-CH(OH)-CH₂-; each α is an integer of from 10 to 1000; β is an integer of from 0 to 4; and, γ is an integer of from 2 to 6; subject to the proviso that the sum (β+γ) is from 3 to 6.

Polymers of the general formula (PT) may be obtained by the thiolation of a (C₂-C₄)alkylene oxide adduct of an aliphatic polyol having from 3 to 6 hydroxyl groups. The aliphatic polyol may typically have a molecular weight of 400 Daltons or less. Non-limiting examples of aliphatic triols include: 1,2,3-propanetriol; 1,2,4-butanetriol; 2-ethyl-2-hydroxymethyl-1,3-propanediol (*trimethylolpropane*); 3-methyl-1,3,5-pentanetriol; 1,2,3-hexanetriol; 1,2,6-hexanetriol; 2,5-dimethyl-1,2,6-hexanetriol; 1,2,3-heptanetriol; 1,2,3-octanetriol; and, 2-hydroxymethy1-1,3-propanediol. Non-limiting examples of aliphatic tetrols and aliphatic pentols include: 2,2-bis(hydroxymethyl)propane-1,3-diol (*pentaerythritol*); pentose; pentopyranose; 6-deoxyhexopyranose; 2,5-anhydrohexitol; 1,5-anhydrohexitol; 6-deoxyhexose; 1-deoxyhexitol; and, pentitol. An exemplary polyol having six hydroxyl groups is D-glucitol (*sorbitol*).

In an exemplary embodiment, constituent b) ii) comprises a polymer obtained by the thiolation of a (C₂-C₄)alkylene oxide adduct of 2,2-bis(hydroxymethyl)propane-1,3-diol (*pentaerythritol*). In a second exemplary embodiment, constituent b) ii) comprises a polymer obtained by the thiolation of a (C₂-C₄)alkylene oxide adduct of 2-ethyl-2-hydroxymethyl-1,3-propanediol (*trimethylolpropane*).

For completeness, an exemplary commercial product having utility in or as constituent b) ii) is ST-034 available from Shina T&C.

### c) Flame Retardant Compound

The composition of the present disclosure comprises c) at least one flame retardant compound. The composition may preferably comprise, based on the weight of the composition, from 20 to 65 wt.% of c) said at least one flame retardant compound. For example, the composition may comprise from 40 to 65 wt.%, from 45 to 60 wt.% or from 50 to 60 wt.% of said least one flame retardant compound, based on the weight of the composition.

Where constituent c) is present in an amount below 20 wt.% of the composition, the composition may deleteriously become free-flowing and furthermore the thermal propagation properties of the composition, upon curing, may be adversely affected. Where constituent c) is present in an amount above 65 wt.% of the composition, this may render the composition too viscous for certain methods of application.

The or each flame retardant compound included in composition should be inert to the polymerization of the resin system, that is inert towards constituents a), b) i) and b) ii). The flame retardant compounds may thus be disposed in the first component of the composition, in the second component of the composition or in both of said components. It is preferred that both components comprise a fractional amount of the total amount of flame retardant compound(s) in the composition as this may facilitate the mixing of the two components. In this circumstance, the flame retardant compound(s) may be independently selected for each component: the flame retardant compound(s) of the two components may thus be the same or different.

The flame retardant compounds of the composition may be in the solid or liquid state at room temperature and pressure. Where one or more solid flame retardant compounds are used, those solid compounds should be in a particulate form although there is no particular intention to limit the shape of the particles employed: particles that are acicular, spherical, ellipsoidal, cylindrical, bead-like, cubic or platelet-like may be used alone or in combination. Moreover, it is envisaged that agglomerates of particles, including agglomerates of more than one particle type, may be used. It is preferred however that the particles of solid flame retardant should have an aspect ratio of less than 5, such as less than 2, less than 1.5 or less than 1.3. The use of ellipsoidal or spherical particles, for instance, can serve to obviate the composition having an undesirably high viscosity at the conventional loading of the flame retardant.

Equally, there is no particular intention to limit the size of the particles of any solid flame retardant compounds employed. However, the or each solid flame retardant compound should preferably possess a mean volume particle size (D_{V}50), as measured by laser diffraction, of from 0.1 to 500 µm, for example from 0.5 to 200 µm or from 0.5 to 100 µm.

It is preferred that c) said at least one flame retardant compound is chosen from: aluminium trihydroxide; mica; calcium carbonate; arsenic oxide; antimony trioxide; calcium sulfate; cyanuric acid derivatives, such as melamine cyanurate; phosphate flame retardants, such as cresyl diphenyl phosphate, triphenyl phosphate, tricresyl phosphate, tris-(isopropylated phenyl)-phosphate, trixylyl phosphate, tritolyl phosphate, 2-ethylhexyl diphenyl phosphate, decyl diphenyl phosphate, tris-(2-chloroethyl)-phosphate, tris-(2-chloropropyl)-phosphate, tris-(2,3-dibromopropyl)-phosphate and tetrakis-(2-chloro)-ethylene diphosphate; dimethyl methyl phosphonate; diethyl ethyl phosphonate; chloroparaffins; hexabromobenzene; brominated diphenylethers; dibromoneopentyl glycol; mono pentaerythritol; dipentaerythritol; coated red phosphorus; and, mixtures thereof. The use of cresyl diphenyl phosphate, calcium carbonate, ammonium polyphosphate or mixtures thereof may be mentioned.

The above preferred flame retardant compounds are preferred because they enable the composition according to the present disclosure to be applied as a thin and lightweight layer of a protective coating, which reduces propagation of temperature and provides flame retardant and heat insulation properties.

Suitable commercially available flame retardant compounds for use in the present invention include but are not limited to: WSFR-71B, available from Zhejiang Wangsheng Company; Exofit AP 422, available from Clariant AG; Omya BLH available from Omya; Disflamoll DPK available from Lanxess; and, Apyral 16, aluminium trihydroxide, available from Nabaltec AG.

### d) Carbon Particles

The composition of the present disclosure comprises d) particulate carbon. The composition may preferably comprise, based on the weight of the composition, from 1 to 30 wt.% of d) said particulate carbon. For example, the composition may comprise from 1 to 25 wt.%, from 5 to 25 wt.% or from 5 to 20 wt.% of d) said particulate carbon, based on the weight of the composition.

The particulate carbon may be disposed in the first component of the composition, in the second component of the composition or in both of said components. It is preferred that both components comprise a fractional amount of the total amount of particulate carbon in the composition as this may facilitate the mixing of the two components. In this circumstance, the type and morphology of the carbon particles may be independently selected for each component: the carbon of the two components may thus be the same or different.

Exemplary forms of particulate carbon which may be used alone or in combination, include, but are not limited to: carbon black; carbon fiber; graphite, including expanded graphite; graphene; and, carbon nanostuctures. Independently of the selection of carbon form, it is preferred that said particulate carbon has a mean volume particle size (D_{V}50), as measured by laser diffraction, of from 0.1 to 500 µm, for example from 0.5 to 200 µm or from 0.5 to 100 µm.

Exemplary commercial carbon blacks which may have utility herein include: Black Pearls 2000^{®}, Vulcan^{®} XC-72, Vulcan^{®}3C and Vulcan^{®} C available from Cabot Corporation; and; Ketjenblack^{®}, available from Nouryon.

The term *"carbon fiber"* refers to a fiber of which carbon constitutes at least 95 wt.%, based on the weight of the fiber. As is known in the art, carbon fibers may be classified by the precursors from which are they are derived. Polyacrylonitrile (PAN), pre-oxidized polyacrylonitrile, isotropic-pitch- and mesophase-pitch-based carbon fibers are produced by the wet (solution) spinning of each precursor followed by oxidative stabilization and carbonization (or graphitization) at a temperature up to 1300°C. Vapor-grown carbon fibers are prepared by thermal decomposition of a hydrocarbon vapor, such as methane (CH₄), in which method oxidative stabilization is not needed. There is no intention in the present disclosure to limit the precursor from which the carbon fibers are obtained. However, it is preferred herein that the carbon fibers have a diameter of from 5 to 25 µm.

Exemplary commercial carbon fibers having utility herein include: Pyrograf^{®} III carbon fibers, available from Pyrograf Products Inc; and, Thornel^{®} carbon fibers, available from Solvay.

The term *"carbon nanostructure"* or *"CNS"* refers herein to a plurality of carbon nanotubes (CNTs) that can exist as a polymeric structure through, in particular, sharing common walls with one another and / or through being one or more of: interdigitated; branched; entangled; or, crosslinked. Thus, carbon nanostructures can be considered to have carbon nanotubes as a base monomer unit of their polymeric structure.

As used herein, the term *"carbon nanotube"* refers to carbon fullerene, a synthetic graphite, which typically has a molecular weight of greater than 840 g/mole. The term is intended to encompass roped carbon nanotubes, single-walled carbon nanotubes (SWNT), multiple walled carbon nanotubes (MWNT). It is further envisaged that carbon nanotubes having utility herein may be opened or chopped, for which US Patent No. 7,641,829 B2 provides an instructive reference. And still further, the present disclosure does not preclude the use of carbon nanotubes which have been chemically modified through, for example doping with thionyl chloride (SOCl₂). For completeness, exemplary commercial providers of carbon nanotubes are: Unidym Inc.; and, Carbon Nanotechnologies, Inc.

In a preferred embodiment, constituent d) comprises or consists of expanded graphite. It is particularly preferred for constituent d) to comprise or consist of expanded graphite having a mean volume particle size (Dv50), as measured by laser diffraction, of from 0.5 to 100 µm, for instance from 0.5 to 50 µm. The term "*expanded graphite"* as used herein references a graphite which has been heated, optionally in the presence of a polymeric or acidic agent, to separate the individual platelets thereof. The term is considered to encompass exfoliated graphite. The expanded graphite usually does not have any significant crystalline order as evidenced by an x-ray diffraction pattern.

For completeness an exemplary commercial expanded graphite having utility in the present composition is EG-325S, available from Stahnek Co. Ltd.

### e) Particulate Metal Oxide

The composition of the present disclosure may comprise e) at least one particulate oxide compound selected from the group consisting of: titanium dioxide; iron oxide; aluminium oxide; magnesium oxide; and, silicon dioxide. For completeness, silicon dioxide having utility in constituent e) of the present disclosure may be provided in one or more forms, such as one or more of fumed silica, fused silica, amorphous silica, hydrous silica or nano-silica. That aside, it is preferred that constituent e) comprises or consists of titanium dioxide.

The composition may preferably comprise, based on the weight of the composition, from 0 to 30 wt.% of e) said at least one oxide compound. For example, the composition may comprise from 1 to 30 wt.%, from 5 to 30 wt.% or from 10 to 30 wt.% of said least one oxide, based on the weight of the composition.

The particulate oxide(s) may be disposed in the first component of the composition, in the second component of the composition or in both of said components. It is preferred that both components comprise a fractional amount of the total amount of oxide in the composition as this may facilitate the mixing of the two components. In this circumstance, the oxide compound(s) may be independently selected for each component: the oxide compound(s) of the two components may thus be the same or different.

There is no particular intention to limit the shape of the oxide particles of employed: particles that are acicular, spherical, ellipsoidal, cylindrical, bead-like, cubic or platelet-like may be used alone or in combination. Moreover, it is envisaged that agglomerates of particles, including agglomerates of more than one particle type, may be used. It is preferred however that the particles of oxide compound should have an aspect ratio of less than 5, such as less than 2, less than 1.5 or less than 1.3. The use of ellipsoidal or spherical particles, for instance, can serve to obviate the composition having an undesirably high viscosity at the conventional loading of the oxide compound.

Equally, there is no particular intention to limit the size of the particles of oxide compound employed. However, the or each oxide compound should preferably possess a mean volume particle size (Dv50), as measured by laser diffraction, of from 0.1 to 500 µm, for example from 0.5 to 200 µm or from 0.5 to 100 µm.

Exemplary commercial sources of oxide compounds having utility in constituent e) include: Tiona 595, available from Tronox; titanium dioxide in rutile form, available from Kronos; Cab-O-Sil M5 and Cab-O-Sil M 720, fumed silica available from Cabot Corporation; and, Bayferrox 306, iron oxide available from Lanxess AG.

### f) Additives and Adjunct Ingredients

The compositions of the present disclosure may further comprise adjuvants and additives that can impart improved properties thereto. For instance, the adjuvants and additives may impart one or more of: improved wetting; longer enabled processing time; faster curing time; and, lower residual tack. Included among such adjuvants and additives - which independently of one another may be included in single components or both components of a two-component (2K) composition - are: catalysts; plasticizers; stabilizers including UV stabilizers; antioxidants; tougheners; fillers; drying agents; adhesion promoters; fungicides; rheological adjuvants; color pigments; color pastes; dyes; and/or optionally also, to a small extent, non-reactive diluents.

For completeness, it is noted that in general adjunct materials and additives which contain epoxide-reactive groups will be blended into the second or hardener component of the two-component (2K) composition. Materials that contain epoxide groups or which are reactive with the hardener(s) are generally formulated into the first, epoxide-containing component of the two-component (2K) composition. Unreactive materials may be formulated into either or both of the first and second components.

The use of catalysts is not required in the present application and indeed, in preferred embodiments, the composition may be substantially free of catalysts. However, in certain circumstances it may be advantageous to add a catalytic amount of one or more substances that promote the reaction between the epoxide groups and the epoxide-reactive groups, for instance the reaction between the amine groups and the epoxide groups. Thus, in certain embodiments, the two-component (2K) composition comprises, based on the weight of the composition, from 0 to 2 wt.%, preferably from 0 to 1 wt.% or from 0.1 to 1 wt.% of at least one catalyst.

Without intention to the limit the catalysts used in the present disclosure, mention may be made of the following suitable catalysts: i) acids or compounds hydrolyzable to acids, in particular a) organic carboxylic acids, such as acetic acid, benzoic acid, salicylic acid, 2-nitrobenzoic acid and lactic acid; b) organic sulfonic acids, such as methanesulfonic acid, p-toluenesulfonic acid and 4-dodecylbenzenesulfonic acid; c) sulfonic acid esters; d) inorganic acids, such as phosphoric acid; e) Lewis acid compounds, such as BF₃ amine complexes, SbF₆ sulfonium compounds, bis-arene iron complexes; f) Bronsted acid compounds, such as pentafluoroantimonic acid complexes; and, e) mixtures of the aforementioned acids and acid esters; ii) tertiary amines; iii) quaternary ammonium salts, such as benzyltrimethyl ammonium chloride; iv) amidines, such as 1,8-diazabicyclo[5.4.0]undec-7-ene; v) guanidines, such as 1,1,3,3-tetramethylguanidine; vi) phenols, in particular bisphenols; vii) phenol resins; and, vii) phosphites, such as di- and triphenylphosphites.

The use of at least one tertiary amine as a catalytic compound may be preferred in some embodiments. Examples of suitable tertiary amines, which may be used alone or in combination, include: trimethylamine; triethylamine; tetraethylmethylenediamine; triethylenediamine; hexamethylenetetramine; tetramethylpropane-1,3-diamine; tetra-methylhexane-1,6-diamine; pentamethyldiethylenetriamine; 1,4-diazabicyclo[2.2.2]octane; 1,8-diazabicycloundecene-7; 1,5-diazabicyclo-nonene-5; bis(2-dimethylaminoethyl)ether; ethylene glycol (3-dimethyl)aminopropyl ether; dimethyl-aminoethanol; dimethylaminoethoxyethanol; N,N,N'-trimethylaminoethylethanolamine; dimethylcyclohexylamine; N,N-dimethylaminomethylphenol; N,N-dimethylpropylamine; N,N,N',N'-tetramethylhexamethylenediamine; N-methylpiperidine; N,N'-dimethylpiperazine; N,N-dimethylbenzylamine; α-methylbenzyl dimethylamine; dimethylaminomethylphenol; 2,4,6-tris(dimethylaminomethyl)phenol; dimethylpiperazine; N-methyl-N'-(2-dimethylamino)-ethylpiperazine; N-methylmorpholine; N-(N',N'-(dimethylamino)ethyl)morpholine; N-methyl-N'-(2-hydroxyethyl)morpholine; and, imidazoles, such as N-methylimidazole, N-vinylimidazole and 1,2-dimethylimidazole. The salts of such tertiary amines may also be used.

In an embodiment, a catalyst for the curing the composition may be a photobase generator: upon exposure to UV radiation - typically in the wavelength from 320 to 420 nm - said photobase generator releases an amine, which catalyzes the addition of the epoxide reactive groups to the epoxide. The photobase generator is not specifically limited so long as it generates an amine directly or indirectly with light irradiation. However, suitable photobase generators which may be mentioned include: benzyl carbamates; benzoin carbamates; o-carbamoylhydroxyamines; O-carbamoyloximes; aromatic sulfonamides; alpha-lactams; N- (2-allylethenyl)amides; aryl azide compounds, N-arylformamides, and 4-(ortho-nitrophenyl)dihydropyridines.

In an alternative embodiment, an acid catalyst may be selected from photoacid generators (PAGs): upon irradiation with light energy, ionic photoacid generators undergo a fragmentation reaction and release one or more molecules of Lewis or Bronsted acid that catalyze the ring opening and addition of the pendent epoxide groups to form a crosslink. Useful photoacid generators are thermally stable, do not undergo thermally induced reactions with the forming copolymer and are readily dissolved or dispersed in the curable compositions.

Exemplary cations which may be used as the cationic portion of the ionic PAG of the disclosure include organic onium cations such as those described in US Patent No. 4,250,311, US Patent No. 3,113,708, US Patent No. 4,069,055, US Patent No. 4,216,288, US Patent No. 5,084,586, US Patent No. 5,124,417, and, US Patent No. 5,554,664. The references specifically encompass aliphatic or aromatic Group IVA and VIIA (CAS version) centered onium salts, with a preference being noted for I-, S-, P-, Se- N- and C-centered onium salts, such as those selected from sulfoxonium, iodonium, sulfonium, selenonium, pyridinium, carbonium and phosphonium.

As is known in the art, the nature of the counter-anion in the ionic photoacid generator (PAG) can influence the rate and extent of cationic addition polymerization of the epoxide groups. For illustration, the order of reactivity among commonly used nucleophilic anions is SbF₆ > AsF₆ > PF₆ > BF₄. The influence of the anion on reactivity has been ascribed to three principle factors which the skilled artisan should compensate for in the present disclosure: (1) the acidity of the protonic or Lewis acid generated; (2) the degree of ion-pair separation in the propagating cationic chain; and, (3) the susceptibility of the anions to fluoride abstraction and consequent chain termination.

It is not precluded that the compositions of the present disclosure include alternative photoinitiator compounds to the photobase generator and photoacid generator compounds mentioned herein above, which photoinitiator compound(s) would initiate the polymerization or hardening of the compositions upon irradiation with actinic radiation. It is noted that photo-polymerizable compositions of the present disclosure can be cationically polymerizable or free-radically polymerizable: whilst epoxy groups are cationically active, the election of a free-radical polymerization mechanism imposes the requirement that the composition must contain a compound possessing a free-radically active, unsaturated group such as an acrylate compound, a (meth)acrylate compound, an epoxy-functional acrylate, an epoxy functional (meth)acrylate or a combination thereof. Applying that election, the preferred photoinitiators would be photoactive compounds that undergo a Norrish I cleavage to generate free radicals that can initiate by addition to the acrylic double bonds.

*In toto* photoinitiators should be present in the composition in amount of from 0 to 1.0 wt.%, based on the weight of the composition.

The use of a photoinitiator - and also the photobase generator and photoacid generators mentioned herein above - may produce residue compounds from the photochemical reaction. The residues may be detected by conventional analytical techniques such as: infrared, ultraviolet and NMR spectroscopy; gas or liquid chromatography; and, mass spectroscopy. Thus, the present disclosure may comprise cured (epoxy) matrix copolymers and detectable amounts of residues from a photobase/acid generator. Such residues are present in small amounts and do not normally interfere with the desired physiochemical properties of the product.

Without intention to limit the present disclosure, a mixture comprising one or more photoinitiators may be irradiated with activating radiation to polymerize the monomeric component(s). The purpose of the irradiation is to generate the active species from the photoinitiator which initiates the cure reactions. Once that species is generated, the cure chemistry is subject to the same rules of thermodynamics as any chemical reaction: the reaction rate may be accelerated by heat.

As would be recognized by the skilled artisan, photosensitizers can be incorporated into the compositions to improve the efficiency with which any photoinitiators present use the energy delivered. Photosensitizers are typically used in an amount of from 5 to 25 wt.%, based on the weight of the photoinitiator.

A *"plasticizer"* for the purposes of this disclosure is a substance that decreases the viscosity of the composition and thus facilitates its processability. Herein the plasticizer may constitute up to 10 wt.% or up to 5 wt.%, based on the total weight of the composition, and is preferably selected from the group consisting of: polydimethylsiloxanes (PDMS); diurethanes; ethers of monofunctional, linear or branched C4-C16 alcohols, such as Cetiol OE (obtainable from Cognis Deutschland GmbH, Düsseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; epoxidized plasticizers; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

*"Stabilizers"* for purposes of this disclosure are to be understood as antioxidants, UV stabilizers or hydrolysis stabilizers. Herein stabilizers may constitute *in toto* from 0 to 10 wt.%, for example from 0 to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

Whilst the composition of the present disclosure may comprise one or more particulate flame retardant compounds and may further comprise one or more particulate oxide compounds, this does not preclude the presence in the composition of further particulate fillers. Such fillers may serve as *inter alia* reinforcing fillers, extending fillers, magnetic fillers, electrically conductive fillers, thermally conductive fillers or as absorbers of electromagnetic radiation. Whilst such further fillers should be typically comprise more than 10 wt.% of the weight of the composition, the desired viscosity of the curable composition will typically be determinative of the total amount of further filler which may be added.

Exemplary further inorganic fillers include, for example, zeolites, bentonites, magnesium carbonate, diatomite, quartz, flint, glass powder, and other ground mineral substances. Short fibers such as glass fibers, glass filament, polyacrylonitrile, Kevlar fibers, or polyethylene fibers can also be added.

Also suitable as fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used: they are made up of inorganic or organic substances and each have a diameter of 1 mm or less, preferably 500 µm or less.

Fillers which impart thixotropy to the composition may be preferred for many applications: such fillers are also described as rheological adjuvants, e.g. hydrogenated castor oil or swellable plastics such as PVC.

It is noted that compounds having metal chelating properties may also be used in the compositions of the present disclosure to help enhance the adhesion of the cured composition to a substrate surface. Also suitable for use as adhesion promoters are the acetoacetate-functionalized modifying resins sold by King Industries under the trade name K-FLEX XM-B301.

A need also occasionally exists to lower the viscosity of the composition according to the present disclosure for specific applications, by using non-reactive diluent(s). For instance, but for illustration only, the composition may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; aromatic hydrocarbon resins especially those containing phenol groups, such as ethoxylated or propoxylated phenols; adipates; sebacates; phthalates; benzoates; organic phosphoric or sulfonic acid esters; and, sulfonamides.

The above aside, it is preferred that said non-reactive diluents constitute less than 10 wt.%, in particular less than 5 wt.% or less than 2 wt.%, based on the total weight of the composition.

### METHODS AND APPLICATIONS

To form the two-component (2K) curable compositions, the reactive components are brought together and mixed in such a manner as to induce the hardening thereof: the reactive compounds should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers.

For small-scale liner applications in which volumes of less than 2 liters will generally be used, the preferred packaging for the two-component (2K) compositions will be side-by-side double cartridges or coaxial cartridges, in which two tubular chambers are arranged alongside one another or inside one another and are sealed with pistons: the driving of these pistons allows the components to be extruded from the cartridge, advantageously through a closely mounted static or dynamic mixer. For larger volume applications, the two components of the composition may advantageously be stored in drums or pails: in this case, the two components are extruded via hydraulic presses, in particular by way of follower plates, and are supplied via pipelines to a mixing apparatus which can ensure fine and highly homogeneous mixing of the first and second components. In any event, for any package it is important that the first component be disposed with an airtight and moisture-tight seal, so that both components can be stored for a long time, ideally for 12 months or longer.

Non-limiting examples of two-component dispensing apparatuses and methods that may be suitable for the present disclosure include those described in U.S. Patent No. 6,129,244 and US Patent No. 8,313,006.

The two-component (2K) curable compositions should broadly be formulated to exhibit an initial viscosity - determined within two minutes of the mixing of the components - of less than 10000 mPa·s, for instance less than 8000 mPa.s or even less than 5000 mPa.s, at 25°C. The composition may desirably have an initial viscosity of from 1000 to 5000 mPa.s or from 1000 to 4000 mPa.s, as determined at 25°C. Independently of or additional to said viscosity characteristics, the two-component (2K) composition should be formulated to be bubble (foam) free upon mixing and subsequent curing.

The initially mixed compositions may then be applied to substrates by conventional methods such as: casting; brushing; roll coating; doctor-blade application; printing methods; jetting; omega coating; control seam coating; dot coating; and, spraying methods, including but not limited to air-assisted spray, airless spray, high-volume low-pressure spray, flat-stream, slot spray and curtain spray coating.

For coating, adhesive and sealant applications, it is recommended that the compositions be applied to a wet film thickness of from 10 to 250 µm, for example from 25 to 150 µm. The application of thinner layers within this range is more economical and provides for a reduced likelihood of thick cured regions that may - for coating applications - require sanding. However, great control must be exercised in applying thinner coatings or layers so as to avoid the formation of discontinuous cured films.

In an alternative statement, which is not intended to be mutually exclusive of the above, it is recommended that the compositions be applied such that the coating weight of the materials is from 50 to 250 grams per square metre (gsm), preferably from 50 to 150 gsm.

The two-component (2K) composition may typically be formulated to demonstrate a setting time of at least 30 minutes and more commonly of from 60 to 540 minutes or from 180 to 540 minutes, which setting time is understood herein to be the time after which the viscosity of the composition - when maintained at 25°C - has doubled from its initial viscosity. The rate of curing of the compositions can, of course, be moderated by the input of energy.

The curing of the compositions of the disclosure typically occurs at temperatures in the range of from -10°C to 120°C, preferably from 0°C to 70°C, and in particular from 20°C to 60°C. The temperature that is suitable depends on the specific compounds present and the desired curing rate and can be determined in the individual case by the skilled artisan, using simple preliminary tests if necessary. Of course, curing at temperatures of from 10°C to 35°C or from 20°C to 30°C is especially advantageous as it obviates the requirement to substantially heat or cool the mixture from the usually prevailing ambient temperature. Where applicable, however, the temperature of the mixture formed from the respective components of the two-component (2K) composition may be raised above the mixing temperature and / or the application temperature using conventional means including microwave induction.

In those embodiments, where the compositions are curable under photo-irradiation, the energy source used to promote the curing of the applied materials will emit at least one of ultraviolet (UV) radiation, infrared (IR) radiation, visible light, X-rays, gamma rays, or electron beams (e-beam). Subsequent to their application, the compositions may typically be activated in less than 2 minutes, and commonly between 0.1 and 100 seconds - for instance between 0.1 and 10 seconds - when irradiated using commercial curing equipment. For completeness, the activation of the compositions may be effected in an inline process wherein the coated substrate is conveyed under the curing equipment as it emits radiation: it will be understood that the aforementioned activation times will be the time of exposure of the applied compositions to the irradiation in such an inline process.

Irradiating ultraviolet light should typically have a wavelength of from 150 to 600 nm and preferably a wavelength of from 200 to 450 nm. Useful sources of UV light include, for instance, low intensity fluorescent lamps, metal halide lamps, microwave powered lamps, xenon lamps, UV-LED lamps and laser beam sources such as excimer lasers and argon-ion lasers. The use of UV-LED lamps is preferred whereas the use of mercury-based UV light systems is neither desirable nor required.

Where an e-beam is utilized to cure the applied composition, standard parameters for the operating device may be: an accelerating voltage of from 0.1 to 100 keV; a vacuum of from 10 to 10⁻³ Pa; an electron current of from 0.0001 to 1 ampere; and, power of from 0.1 watt to 1 kilowatt.

The amount of radiation necessary to sufficiently cure an individual composition - such that a coating thereof becomes fixed, for example - will depend on a variety of factors including the angle of exposure to the radiation and the thickness of an applied composition. Broadly, however, a curing dosage of from 100 to 10000 mJ/cm² may be cited as being typical: curing dosages of from 200 to 8000 mJ/cm², such as from 300 to 6000 mJ/cm² may be considered highly effective.

The compositions of the present disclosure may find utility *inter alia* as: casting resins; potting and encapsulation resins; binding agents for fibers and / or particles; the coating of glass; the coating of mineral building materials, such as lime- and / or cement-bonded plasters, gypsum-containing surfaces, fiber cement building materials and concrete; the coating, sealing and adhesion of wood and wooden materials, such as chipboard, fiber board and paper; the coating, sealing and adhesion of metallic substrates; and, the coating, sealing and adhesion of various plastic surfaces.

For completeness, it is noted that the present disclosure does not preclude the preparation of compositions in the form of *"film adhesive".* A pre-polymer mixture of epoxide compounds, curative and other desired components is applied as a coating onto a polymer film substrate, rolled up and stored at a sufficiently low temperature to inhibit the chemical reactions between the components. When needed, the film adhesive is removed from the low temperature environment and applied to a metal or composite part, the backing is stripped off and the assembly completed and cured in an oven or autoclave.

In that embodiment where the composition is to be employed in the potting of electronic components, the initially mixed composition would typically be introduced into a defined mold by static potting or centrifugal potting: the electronic component to be potted would be at least partially disposed in the mold. In a static potting technique, the composition is introduced into the potting mold while the mold is substantially stationary. In centrifugal potting methods, the composition is introduced into a potting mold whilst the mold is rotated such that the rotation of the mold forces the potting composition towards an end of the rotating mold by centrifugal force.

In either the static or centrifugal potting methods, the introduction of the composition may be either through contact or non-contact means. As an exemplary contact methodology, mention may be made of funneling. As exemplary non-contact methodologies, there may be mentioned jetting, omega coating, control seam coating and slot spray coating. The introduction of the potting composition under pressure is not required but should a pressurized application be elected, suitable pressures may be from 1.5 to 20 bars, for example from 2 to 10 bars.

The above aside, central to any method of application is that the potting composition is sufficiently fluid upon introduction into the mold for it to penetrate the desired regions of the electronic component at least partially disposed therein and then to harden to seal or encapsulate said regions. Upon introduction into the mold, the composition may be characterized by a viscosity of less than 10000 mPa·s, for instance less than 8000 mPa.s or even less than 5000 mPa.s as determined at 25°C. Where applicable, the temperature of the potting composition may be raised from its initial or formation temperature to its introduction temperature using conventional means, such as: convection ovens; vacuum melting furnace; resistance heating rods; and, arc melters.

The employment of a static molding process as described does not preclude the application of vibration to the composition whilst it is in the liquid state. As such, a potting apparatus may include at least one vibration imparting device. In an illustrative embodiment, the apparatus employed for the application of the potting composition to the electronic component includes: a heater for the potting composition; a mold configured to receive the potting portion of the electronic component; and, a conveyance assembly comprising one or more channels, the assembly providing fluid communication of the liquid composition between the heater and the mold, wherein the apparatus is characterized in that it further comprises at least one vibration imparting device.

The vibration imparting device should not be disposed in the internal volume of the mold or, more particularly, within the molten potting material itself. Typically, the vibration imparting device will directly contact an outside surface of the mold or, alternatively, be disposed sufficiently proximate to an outside surface of the mold to ensure the efficacy of the generated vibrations relative to the potting composition disposed therein. In an exemplary embodiment, a vibration table is provided which comprises a static base and an oscillatory planar top on which the mold is disposed during the potting operation. The oscillations may occur along one or more axis - for instance along the major vertical (y) and / or horizontal (x) axes. Moreover, the vibration table may adapted to tilt the plane on which the mold is disposed. Illustrative vibration tables which may have utility in the present disclosure are described in: US Patent No. 4,483,621 (Kreiskorte); US Patent No. 7,802,355 (Spangenberg); and, US2020/0149990 (Nie et al.).

The vibration of the potting composition in the mold serves to reduce the porosity of the potting composition as it hardens in the mold. The composition may contain gas - which has become entrained therein during the heating and conveyance of the composition - and the applied vibration has a degassing effect which can negate or reduce the need to include degassing agents in the potting composition.

The potting composition may be allowed to fully cure within the mold. In some embodiments however, particularly where the mold is to be utilized in a further potting step, the potting composition is permitted to partially cure in the mold; the partially cured potting compositions is then withdrawn from the mold and permitted to fully cure externally.

The term "*partially cured*" means that curing of the curable coating composition has been initiated and that, for example, cross-linking of components of the composition has commenced. The term encompasses any amount of cure upon application of the curing condition, from the formation of a single cross-link up to but not including a fully cross-linked state. The rate and mechanism with which the composition cures is contingent on various factors, including the components thereof, functional groups of the components and the parameters of the curing condition.

At least partial solidification of a given composition is generally indicative of cure. However, cure may be indicated in other ways including, for instance, a viscosity change of the composition, an increased temperature of that composition and / or a transparency / opacity change of that composition.

Typically, the partially cured composition should not be removed from the mold until the composition can substantially retain its shape upon exposure to ambient conditions. By *"substantially retain its shape"* is meant that at least about 50% by volume, and more usually at least about 80% or about 90% by volume of the at least partially cured composition retains its shape and does not flow or deform upon exposure to ambient conditions for a period of 5 minutes. Under such circumstances, gravity typically may not substantially impact the shape of the at least partially cured or partially dried layer upon exposure to ambient conditions.

The shape of a potting layer of partially cured composition - disposed on an electronic component, such as a battery for instance - may typically impact whether that layer substantially retains its shape. For example, when the layer is rectangular or has another simplistic shape, the at least partially cured layer may be more resistant to deformation at even lesser levels of cure than layers having more complex shapes.

The following examples are illustrative of the present invention and are not intended to limit the scope of the invention in any way.

### EXAMPLES

The following commercial products were used in the Examples.
- YD-128:: Epoxy resin based on bisphenol-A and epichlorohydrin, available from Kukdo Chemical Company Ltd.
- DER 331:: Epoxy resin based on bisphenol-A and epichlorohydrin, available from Olin.
- SE-3510:: 1,4-cyclohexanedimethanol diglycidyl ether, available from
- Silquest-187J:: 3-glycidyloxypropyl trimethoxysilane, available from Momentive Performance Materials.
- Ancamine 2432:: Modified aliphatic amine, available from Evonik Industries.
- Ancamine 2914UF:: Modified aliphatic amine, available from Evonik Industries.
- G-A0432:: Fatty acids, tall oil, reaction products with tetraethylenepentamine, available from Kukdo Chemical Company Ltd.
- ST-034:: Trifunctional ester polythiol [poly(oxy(methyl-1,2-ethanediyl)), alpha-hydro-omega-hydroxy, ether with 2,2-bis(hydroxymethyl)-1,3-propanediol (4:1), 2-hydroxy-3-mercapto] available from Shina T&C.
- Exolit AP422:: Ammonium polyphosphate, available from Clariant AG.
- WSFR-71B:: Tris(isobutylphenyl)phosphate, available from Zhejiang Wansheng Co. Ltd.
- Disflamoll DPK:: Cresyl diphenyl phosphate, available from Lanxess AG.
- Apyral 16:: Aluminium trihydroxide, available from Nabaltec AG.
- EG-325S:: Expanded graphite, available from Stahnek Co. Ltd.
- Tiona 595:: Titanium dioxide, available from Tronox.
- Rutile:: Titanium dioxide in rutile form, available from Kronos.
- Cab-O-Sil M 720:: Fumed silica, available from Cabot Corporation.
- Cab-O-Sil M5:: Fumed silica, available from Cabot Corporation.
- Bayferrox 306:: Iron oxide, available from Lanxess AG.
- Omya BLH:: Calcium carbonate, available from Omya International AG.

Any further ingredients mentioned were obtained from Sigma Aldrich.

### Example 1

A composition in accordance with the present disclosure was prepared based on the ingredients of Table 1 below. For completeness, the given percentages by weight are based on the composition *in toto* and not of the first and second components independently.

**Table 1**

| **Ingredient** | **Percentage by Weight of Composition (wt.%)** |
|---|---|
| **First Component** | |
| YD-128 | 6.6 |
| Exofit AP422 | 27.3 |
| SE-3510 | 7.7 |
| EG-325S | 9.3 |
| WSFR-71B | 6.9 |
| Tiona 595 | 19.8 |
| Silquest187J | 5.7 |

| **Second Component** | |
|---|---|
| G-A0432 | 5.1 |
| WSFR-71B | 0.9 |
| Exofit AP422 | 3.7 |
| Tiona 595 | 6.0 |
| ST-034 | 1.0 |

All the ingredients of the first component were combined in one container and mixed using a Flacktec speed mixer. Similarly, all the ingredients of the second component were combined in a separate container and independently mixed using a Flacktec speed mixer.

The viscosity of each component of the composition was tested using a Modular Compact Rheometer MCR302e available from Anton Paar: a parallel plate measuring geometry was employed at a gap (d) of 0.6 mm; and, the applied shear rate was varied from 0.1 to 100 s⁻¹. The results of the viscosity testing are illustrated in Figure 3 appended hereto and indicate that the first and second components possess similar viscosities. This permits facile combination of the two components.

The first and second components were combined together in yet another container and mixed by Flacktec speed mixer prior to application.

### Comparative Example 1

A comparative composition was prepared based on the ingredients of Table 2 below. For completeness, the given percentages by weight are based on the composition *in toto* and not of the first and second components independently.

**Table 2**

| **Ingredient** | **Percentage by Weight of Composition (wt.%)** |
|---|---|
| **First Component** | |
| DER 331 | 28.6 |
| Exofit AP422 | 13.5 |
| Apyral 16 | 18.6 |
| Disflamoll DPK | 5.0 |
| Cab-O-Sil M720 | 0.3 |
| Rutile | 0.7 |

| **Second Component** | |
|---|---|
| Ancamine 2432 | 9.2 |
| Ancamine 2914UF | 5.5 |
| Exolit AP422 | 9.3 |
| Omya BLH | 8.7 |
| Cab-O-Sil M5 | 0.3 |
| Bayferrox 306 | 0.3 |

All the ingredients of the first component were combined in one container and mixed using a Flacktec speed mixer. Similarly, all the ingredients of the second component were combined in a separate container and independently mixed using a Flacktec speed mixer. Subsequently the first and second components were combined together in yet another container and mixed by Flacktec speed mixer prior to application.

### Example 2

Tests were conducted on coatings obtained from: Example 1; Comparative Example 1; and, Mica (available from Mobis).

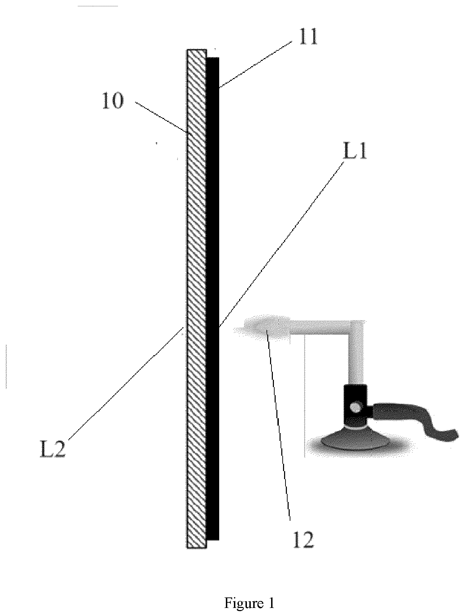

Thermal Propagation Test Method: The basic principle of this test is described with reference to Figure 1 appended hereto.
i) A steel plate (10, SUS316) is provided having a thickness of 600 microns. A stated coating composition is applied to the steel plate and, as applicable to Example 1 and Comparative Example 1, permitted to cure at room temperature. The provided coating (11) each had a dry film thickness of 700 microns. Using an open flame (12), each coating (11) is heated to temperature (T¹, 1200°C) at a first locus (L¹). The temperature (T²) of the steel plate (10) at a second locus (L²) opposite said first locus (L¹) is measured over a 20 minute duration.
ii) In a control experiment, the measurement of T² is performed in the absence of a coating and thus simply at opposite sides of the steel plate (10).

Mechanical Stability of Char: The mechanical stability of the char formed in the treatment of the applied coatings under the thermal propagation test (*T¹*, *20 minutes*) was investigated by two means. Firstly, the char was observed immediately after the thermal propagation test. Secondly, the char was subjected to a pulsed, pressurized air flow (7 Bar, 3 seconds) and the effect thereof on the char recorded.

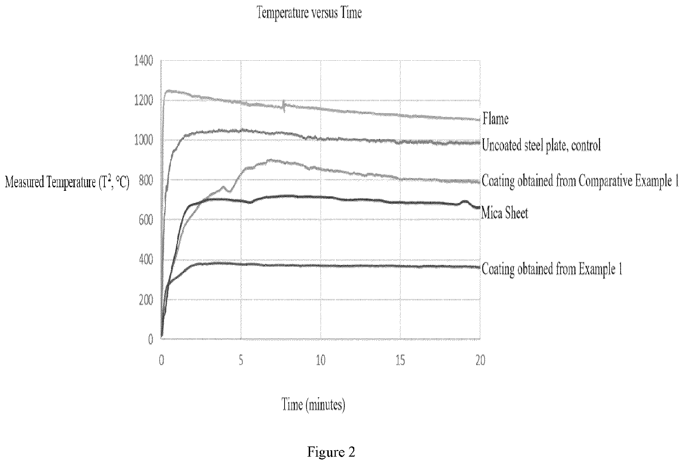

The results of the thermal propagation test are illustrated in Figure 2 appended hereto. In the absence of a coating, the peak measured temperature (T²) does not differ significantly from the applied flame temperature (T¹). The provision of the mica coating and of the coating derived from Comparative Example 1 do serve to lower the measured temperature (T²) as compared to the control but peak temperatures in excess of 600°C were still found in both cases. The coating obtained from the composition of Example 1 did however result in a measured temperature (T²) of below 400°C for the entire 20 minute test duration.

The measured temperatures (T²) at 5 minutes, 10 minutes, 15 minutes and 20 minutes of the thermal propagation test are also reproduced in Table 3 below. That Table also provides details on the observed char for each coating tested.

**Table 3**

| **Coating** | **T¹ (°C)** | **T² (°C)** | | | | **Observed Coating Char** | |
|---|---|---|---|---|---|---|---|
| | | 5 min. | 10 min. | 15 min. | 20 min. | After Thermal Propagation Test | After Air Pressure (7 Bar, 3 seconds) |
| None | 1200 | 1045.9 | 1009.9 | 990.5 | 988.8 | | |
| Mica | 1200 | 694.3 | 714.3 | 686.7 | 662.3 | Minor, radiating cracks | Coating removed; bare steel exposed |
| Comparative Example 2 | 1200 | 828.2 | 854.8 | 802.5 | 788.6 | Multiple, major radiating cracks; some steel exposure | Coating removed; bare steel exposed |
| Example 1 | 1200 | 360 | 357.6 | 352.9 | 356.1 | No observed cracking | No observed cracking |

The charred coating obtained from the Examples in accordance with the present disclosure demonstrates mechanical stability. The charred coating may thereby serve to protect and structurally support the underlying substrate.

In view of the foregoing description and examples, it will be apparent to those skilled in the art that equivalent modifications thereof can be made without departing from the scope of the appended claims.

## Claims

1. A two-component (2K) composition comprising:
a first component comprising:
a) at least one epoxide compound
a second component comprising:
b) i) at least one fatty amide having at least one secondary amide group; and,
b) ii) at least one thiol-terminated branched poly(alkyleneoxide),
wherein at least one of the first and second component of the composition further comprises:
c) at least one flame retardant compound;
d) particulate carbon; and,
optionally e) at least one oxide compound selected from the group consisting of titanium dioxide, iron oxide, aluminium oxide, magnesium oxide and silicon dioxide,
further wherein the composition is **characterized in that** the molar ratio of active hydrogen atoms to epoxide groups is from 0.75:1 to 1:1.

2. The two-component (2K) composition according to claim 1, wherein:
constituent a) constitutes from 5 to 30 wt.% of the composition;
constituent b) i) constitutes from 1 to 20 wt.% of the composition;
constituent b) ii) constitutes from 0.5 to 10 wt.% of the composition;
constituent c) constitutes from 20 to 65 wt.% of the composition;
constituent d) constitutes from 1 to 30 wt.% of the composition;
constituent e) constitutes from 0 to 30 wt.% of the composition; and,
the molar ratio of active hydrogen atoms to epoxide groups is from 0.75: 1 to 1:1.

3. The two-component (2K) composition according to claim 1 or claim 2, wherein constituent a) comprises at least one epoxide compound chosen from: polyglycidyl ethers of polyhydric alcohols; polyglycidyl ethers of polyhydric phenols; polyglycidyl esters of polycarboxylic acids; epoxidized polyethylenically unsaturated hydrocarbons; and, mixtures thereof.

4. The two-component (2K) composition according to any one of claims 1 to 3, wherein constituent a) comprises the reaction product of epichlorohydrin and 4,4'-(propane-2,2-diyl)diphenol.

5. The two-component (2K) composition according to any one of claims 1 to 4, wherein constituent a) comprises at least one epoxide-functional alkoxy silane having the formula (ES):
E-(CH₂)ₙ-Si(R^{s})ₘ(OR^{t})₃₋ₘ (ES)
wherein:
E is 2,3-epoxypropoxy, epoxycyclohexyl or epoxycyclypentyl;
n is from 1-10;
m is 0, 1 or 2;
each R^{s} is independently C₁-C₃ alkyl; and,
each R^{t} is independently C₁-C₃ alkyl.

6. The two-component (2K) composition according to any one of claims 1 to 5, wherein the ratio by weight of constituent b) i) to constituent b ii) is from 55:45 to 99:1, preferably from 60:40 to 95:1 and more preferably from 70:30 to 90:10.

7. The two-component (2K) composition according to any one of claims 1 to 6, wherein constituent b) i) comprises at least one fatty amide having at least one secondary amide group and which is obtainable by the reaction of:
a monocarboxylic acid of the general formula R^{a}C(O)OH; and,
an alkyleneamine having the general formula H₂N(C_{b}H_{2b}NH)_{c}H
wherein:
R^{a} is C₄-C₂₄ alkyl or C₄-C₂₄ alkenyl;
b is 2 or 3; and,
c is from 2 to 8.

8. The two-component (2K) composition according to claim 7, wherein:
R^{a} is C₁₄-C₂₀ alkyl or C₁₄-C₂₀ alkenyl, wherein said alkenyl group has from 1 to 3 carbon to carbon double bonds.

9. The two-component (2K) composition according to claim 7, wherein constituent b) i) is obtainable by the reaction of:
tall oil fatty acid; and,
said at least one alkyleneamine having the general formula H₂N(C_{b}H_{2b}NH)_{c}H.

10. The two-component (2K) composition according to any one of claims 1 to 9, wherein constituent b) ii) comprises a thiol-terminated branched poly(alkylene oxide) having the general formula (PT):
[HO-(-R^{T}-O-)_{α}-CH₂-]_{β}-X-[-CH₂-(-O-R^{T}-)_{α}-A-SH]_{γ} (PT)
wherein:
X is the residue of an aliphatic polyol, said residue having a valency of (β+γ);
R^{T} is C₂-C₄ alkylene;
A is a covalent bond or a divalent linking group;
each α is independently an integer of from 5 to 1000; and,
β is an integer of from 0 to 4; and,
γ is an integer of from 2 to 6;
subject to the proviso that the sum (β+γ) is from 3 to 6.

11. The two-component (2K) composition according to claim 10, wherein in general formula (PT):
X is the residue of an aliphatic polyol, said residue having a valency of (β+γ);
R^{T} is C₂-C₃ alkylene;
A is a covalent bond, -C(O)O-CH₂-, -C(O)O-CH₂-CH₂- or C(O)O-CH(OH)-CH₂-;
each α is an integer of from 10 to 1000;
β is an integer of from 0 to 4; and,
γ is an integer of from 2 to 6;
subject to the proviso that the sum (β+γ) is from 3 to 6.

12. The two-component (2K) composition according to claim 10, wherein in general formula (PT):
X is the residue of an aliphatic polyol, said residue having a valency of (β+γ);
R^{T} is C₃ alkylene;
A is -C(O)O-CH(OH)-CH₂-;
each α is an integer of from 10 to 1000;
β is an integer of from 0 to 4; and,
γ is an integer of from 2 to 6;
subject to the proviso that the sum (β+γ) is from 3 to 6.

13. The two-component (2K) composition according to any one of claims 1 to 12, wherein:
said at least one flame retardant compound is inert towards constituents a) and b); and,
a fraction of the total amount of said at least one flame retardant is present in each of said first component and said second component.

14. The two-component (2K) composition according to any one of claims 1 to 13, wherein constituent d) comprises expanded graphite having a mean volume particle size (D_{V}50) of from 0.5 to 100 µm, as measured by laser diffraction.

15. Use of the two-component (2K) composition as defined in any one of claims 1 to 14 as: a heat and fire retardant coating composition; a structural adhesive; or, a potting compound.
